# EUROPEAN PATENT SPECIFICATION

(11) **EP 1 434 945 B1**
(45) Date of publication and mention of the grant of the patent: **14.12.2005**
(21) Application number: 02782049.7
(22) Date of filing: 11.10.2002
(51) Int. Cl.: F16B 41/00, E05B 35/00

(54) **A LOCKING DEVICE FOR A WHEEL BOLT**
VERRIEGELUNGSVORRICHTUNG FÜR EINEN RADBOLZEN
DISPOSITIF DE BLOCAGE POUR UN BOULON DE ROUE

(30) Priority: 12.10.2001 SE 0103410
(43) Date of publication of application: 07.07.2004
(73) Proprietor: AB J.E. Bergströms Mekaniska Verkstad, 718 22 Frövi (SE)
(72) Inventor: AHLGREN, Ove, S-461 91 Trollhättan (SE)
(74) Representative: Westman, Per Börje Ingemar
(86) International application number: PCT/SE2002/001863
(87) International publication number: WO 2003/038294

(56) References cited:
- EP-A1- 1 002 962
- SU-A1- 1 760 201
- PATENT ABSTRACTS OF JAPAN vol. 2000, no. 05 14 September 2000 & JP 2000 046032 A (NICHIDO DENKO KK) 15 February 2000
- PATENT ABSTRACTS OF JAPAN vol. 005, no. 053 (M-063) 14 April 1981 & JP 56 008 702 A (KOKUSAN KINZOKU KOGYO CO. LTD.) 29 January 1981

## Description

The present invention refers to a locking device for a wheel bolt according to the preamble of the accompanying claim 1.

Owners of wheel-borne vehicles sometimes experience thefts of rims and tyres. Particularly exposed are vehicles having rims made of aluminium, but also steel rims are subjected to thefts, and the purpose of the invention is to provide a locking device, which is intended to make such thefts more difficult.

Hereinafter the invention will be further described as an embodiment with reference to the accompanying drawing figures.
Fig.1 shows an end view of a locking device according to the present invention.
Fig. 2 is a schematical longitudinal cross-section through a locking device according to the invention, fitted to a wheel bolt.

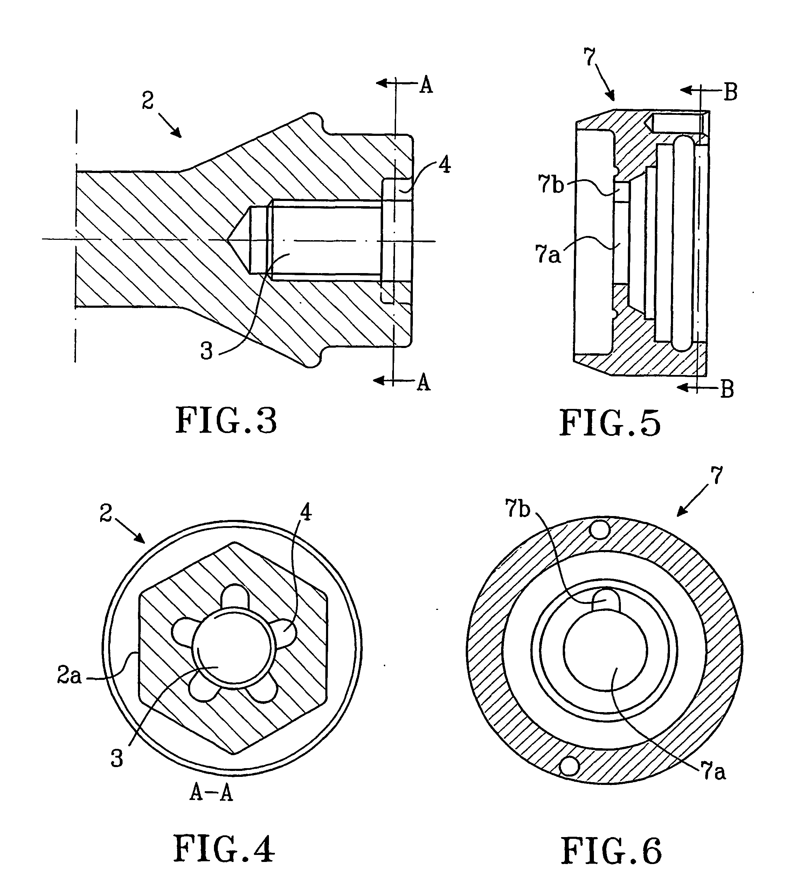

Fig. 3 shows a portion of a wheel bolt in cross-section.
Fig. 4 is a cross section along line A-A in Fig. 3.
Figs. 5 and 6 are views corresponding to Figs. 3 and 4 of an outer ring forming part of the device shown in cross-section and in a section along line B-B, respectively.
Fig. 7 shows in a planar view a mounting key for the locking device.
Fig. 8 is a cross-section of an inner ring forming part of the device, with a screw fitted therein.
Fig. 9 shows a section along line C-C in Fig. 8.
Fig. 10 is a longitudinal section through a centre part forming part of the device and having a cam member inserted therein.
Fig. 11 shows an end view of the centre part in Fig. 10, seen from the cam-provided side.
Fig. 12 is a view along line D-D in Fig. 8.
Fig. 13 shows a view along line E-E in Fig. 10.
Fig. 14 shows in an exploded view the wheel bolt and the locking device under mounting of the locking device, and
Figs. 15 and 16 show a portion of the locking device with mounting key according to Fig. 7 in two different positions of use.

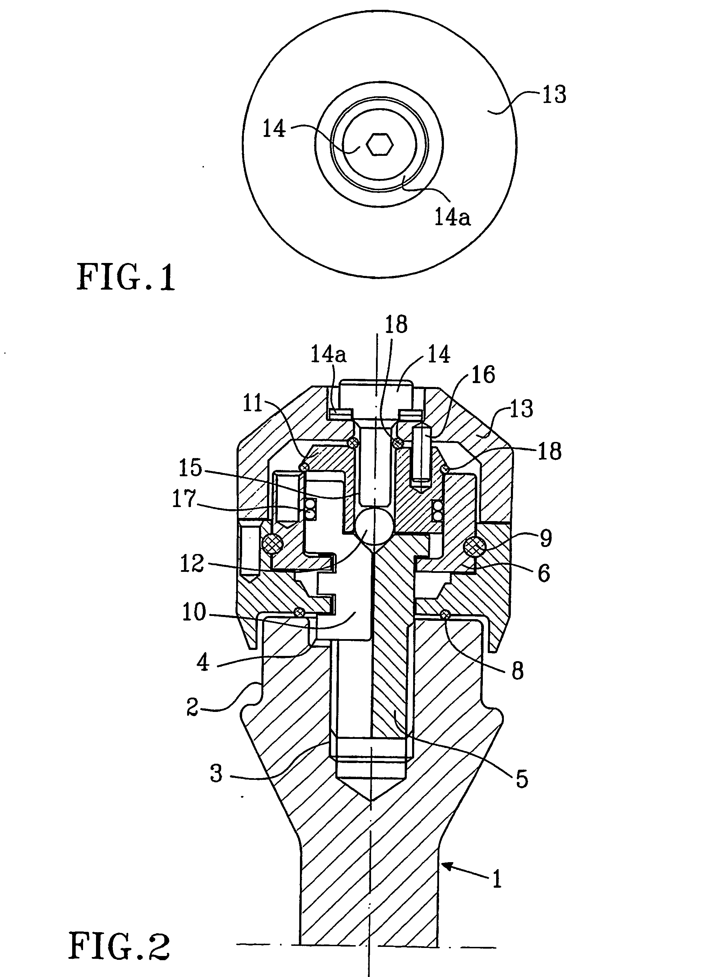

Fig. 1 shows an end view of a locking device for a wheel bolt in accordance with the present invention and as seen from the side turned away from the wheel bolt. The details which are visible in this view are an external cover 13 and the head of an insex screw 14 together with a locking washer 14a.

Fig. 2 shows in a longitudinal section the locking device according to the invention together with a wheel bolt 1, which in ordinary manner is equipped with a threaded shank portion, intended to be screwed onto the wheel axle of the vehicle. In Fig. 2 is however shown only the head 2 of the wheel bolt. This is provided with a coaxial, threaded bore 3, to which from the entrance side connects a number of uniformly disposed, radially projecting recesses 4 - in the embodiment shown 5 - the function of which will be explained later on. In the bore 3 in the bolt 1 is screwed in a screw 5, which cooperates with and and keeps an inner ring 6 in a position aligned with the wheel bolt, when the screw is in its screwed-in position. The inner ring 6 cooperates with, and urges an outer ring 7 against the end surface of the head 2 of the bolt. Between the outer ring 7 and the bolt head 2 is preferably provided an O-ring 8, which acts as a seal and at the same time gives a soft contact between bolt and ring. At the contact between the inner ring 6 and the outer ring 7 there is also provided an O-ring 9 for sealing off the joint.

Each one of the inner ring 6 as well as the outer ring 7 has a central through-opening 6a and 7a, resp. and also a radial groove 6b, 7b extending from the central opening.

Also the screw 5 has a radially extending recess 5a, the dimension of which substantially corresponds to the dimension of the radially extending grooves 6b, 7b in the inner and outer rings 6, 7. When the position of the radial grooves 6b, 7b in the inner and outer rings 6, 7, which are affixed in the bore 3 of the wheel bolt by means of the screw 5, coincide with each other and also with the radially extending recess of the screw it is possible to insert a cam 10 in the passage formed by these grooves 6b, 7b and the recess 5a, which cam is mounted on a hub-shaped centre part 11, which can be pushed into the inner ring 6. Hereby the cam 10 in axial direction is provided with an outer cam portion 10a and an inner cam portion 10b, which are constituted by fixed locking rods, the dimensions of which in radial and axial directions are somewhat smaller than the radial dimensions for the recesses 4 and the grooves 6b, 7b and the axial measure for the space between the recesses 4 and the adjoining side of the outer ring 7, and between the outer ring 7 and the inner ring 6, resp. The end of the centre part facing the screw 5, acts as a seat for a ball 12, which also rests in another seat formed in the rear end of the screw 5, which is facing away from the wheel bolt. This ball is primarily intended to make attempts to open the locking device by drilling more difficult, but it also reduces the friction and is thereby facilitating the mutual rotation of the different cooperating elements. An outer circular cover 13 is arrestable to the centre part 11 by means of a set screw 14, which is secured by means of a locking washer 14a, whereby the set screw 14 can be screwed into a central threaded bore 15 in the centre part. The outer cover is mainly intended to prevent penetration of dirt and to prevent clogging of the dismounting holes in the inner and outer rings 6 and 7 and in the hub part 11 and it is arranged to engage with its outer edge in mounted position against the edge surface of the outer ring 7 facing away from the wheel bolt 1, and the outer cover 13 is prevented from being rotated relative to the centre part 11 by means of a peg 16, which is mounted in axial direction at the inner side of the cover 13 and is arranged to project into a corresponding axial bore in the centre part 11 in the mounted position of the device. In the embodiment shown the cam 10 is arrested at the centre part 11 by means of round wire safety devices 17, and between adjacent surfaces of the elements of the device there is also provided an O-ring seal 18.

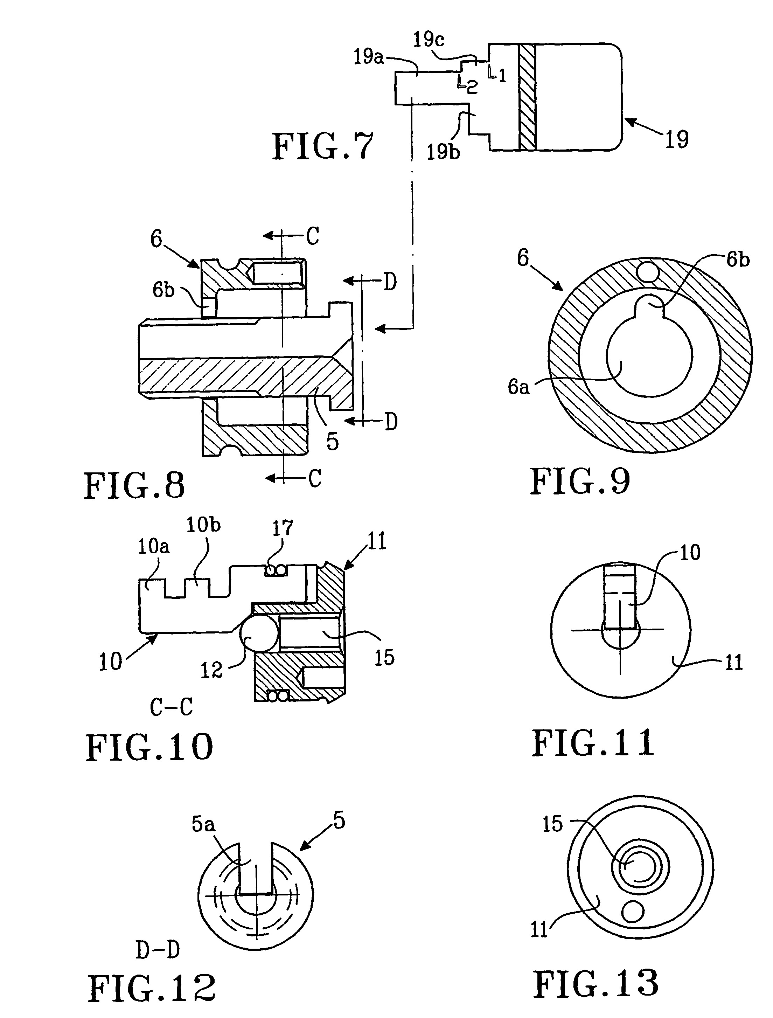

For mounting the locking device it is required a mounting key 19, which is shown in Fig. 7, and which is constituted by a quadrangular plate, preferably from sheet steel, which at one side is provided with a rod-formed projecting part 19a, which in a direction towards the main part of the plate at one side continues in a first step-formed extension 19b and at the other side in a second step-formed extension 19c, whereby the two step-formed extensions 19b, 19c begin at different distances from the end of the rod-formed projecting part 19a, and where the extension 19b, which starts nearer to the end has a larger width than the second step-formed extension 19c and furthermore a larger depth, thus that the two step-formed extensions continue into the quadrangular plate at the same distance from the said end thereof. At the second step-formed extension 19c of the mounting key 19 there is preferably marked two different mounting positions, designated C1 and C2, and positioned at wall portions arranged perpendicularly to the projecting part 19a.

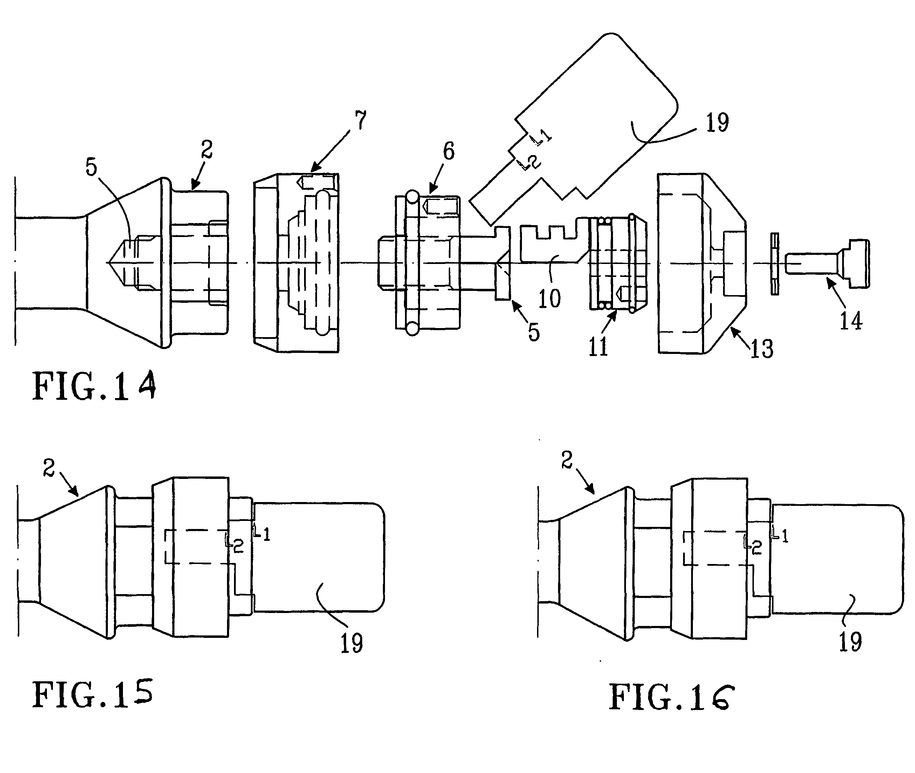

In Fig. 14 is schematically illustrated the mounting of the locking device according to the invention, and this mounting is effected so, that the inner ring 6 is first inserted in the outer ring 7. It is hereby controlled that the radial grooves 6b and 7b are situated just opposite each other. The screw 5 is thereupon inserted in the two joined together rings 6, 7, whereby at the same time it is controlled that the radial recess 5a in the screw is positioned just in front of the grooves 6b, 7b, thus that a continuous channel is formed. The mounting key 19 is thereupon inserted with its rod-formed projecting part 19a in the channel and it is started to screw in the joined unit of inner and outer rings 6, 7 and screw in the threaded bore 3 in the wheel bolt 2. The mounting key 19 hereby is used as a tool, which is thereby pushed in to the bottom, and to its position 1 such as shown in Fig. 15. The screwing-in is continued until the screw 5 has been tightened in the bore 3. The mounting key 19 then is pulled out to position 2 according to Fig. 16 and the screwing-in is continued in the same direction until the inner ring 6 and the outer ring 7 have reached their final positions. Thereupon the screw 5 is tightened a little bit further, so that the O-ring 8 situated between the wheel bolt and the outer ring is flattened out. Hereupon the mounting key 19 is pressed in the direction towards the wheel bolt 2 and is turned anticlockwise until the rod-formed part 19a of the mounting key enters one of the recesses 4 in the wheel bolt. Hereupon the mounting key 19 is withdrawn and the centre part 11 with the cam 10 provided thereon is inserted instead, thus that the cam enters into the groove 5a in the screw 5, and in anyone of the recesses 4 provided in the head of the wheel bolt.

The inner and/or outer rings 6, 7 are then turned different in relation to each other. The outer cover 13 is inserted thus that its pin (see Fig. 2) will enter in its bore in the centre part, and thereupon the set screw 14, which is secured by the locking washer 14a can be screwed in and the locking device is mounted to the wheel bolt and can not be loosened by unauthorized persons in a simple manner without special tools.

### List over reference numerals

- 1.: wheel bolt
- 2.: head
- 2a.: key grip part
- 3.: threaded bore
- 4.: recess
- 5.: screw
- 5a.: radial recess
- 6.: inner ring
- 6a.: through-opening
- 6b.: radial groove
- 7.: outer ring
- 7a.: through-opening
- 7b.: radial groove
- 8.: **O**-ring
- 9.: **O**-ring
- 10.: cam
- 10a.: outer cam part
- 11.: hub-formed centre part
- 12.: ball
- 13.: cover
- 14.: set screw
- 15.: threaded bore
- 16.: peg
- 17.: round wire safety device
- 18.: **O-**ring seal
- 19.: mounting key
- 19a: projecting part
- 19b: first extension
- 19c: second extension
- C1: first mounting position
- C2: second mounting position

## Claims

1. Locking device for wheel bolt (1), of the type, which is provided with a bolt head (2) and a threaded shaft portion,
**characterized therein,**
that the bolt head (2) on its side facing away from the bolt shaft is equipped with a part (2a) acting as a key grip, and a coaxial, threaded bore (3) in form of a blind hole, which opens at the end of the bolt facing away from the shaft portion,
that in the bolt head (2) in the area nearest to the end of the bolt, facing away from the shaft portion is provided at least two recesses (4) directed radially from the bore,
that a screw (5) can be screwed into the coaxial bore (3) provided in the bolt head,
that the screw (5) is provided with a radially extending recess (5a),
that the screw in its position when it has been screwed into the bore (3) in the bolt head (2) is adapted to extend through and support a first, inner rotatable ring (6) and a second outer rotatable ring (7) arranged coaxially thereto,
that each one of the inner ring (6) and the outer ring (7) is provided with a through-opening (6a; 7a) having substantially the same dimensions, and that from each one of these through-openings extends a radial continuous groove (6b; 7b), which continuous grooves (6b; 7b) have substantially the same measure as the radially extending recess (5a) in the screw (5),
that the inner and outer rings (6, 7) are rotatably arranged about the screw (5) and in relation to each other, thus chat the radially continuous grooves (6b; 7b) and the radially extending recess (5a) by mutual rotation can be brought to coincide and thereby to form a continuous channel from the end of the screw facing away from the bolt head (2) to the area around the bore (3) in the bolt head (2), and
that an axially extending cam (10) arranged on a hub-formed centre part (11) is arranged to be inserted in the continuous channel, thus that its outer cam portion (10a) is situated in one of the recesses (4) in the bolt head (2), and its inner cam portion (10b) in a space between the inner ring (6) and the outer ring (7), whereby the inner and outer rings (6,7) following a mutual rotation relative each other are adjustable thus that portions of the channel formed by the continuous grooves (6b; 7b) and the radially extending recess (5a) are angularly displaced and thereby will arrest the outer and/or inner cam part (10a, 10b) from being pulled out.

2. A locking device for a wheel bolt as claimed in claim 1,
**characterized therein,**
that a cover (13) which encloses the hub-formed centre part (11) is fitted to and rotatably attached to the centre part (11).

3. A locking device for a wheel bolt as claimed in claim 2,
**characterized therein**,
that the hub-formed centre part (11) is provided with a bore (15), which on the side facing away from the wheel bolt supports an attachment means (14) for arresting the cover (13) to the hub part.

4. A locking device for a wheel bolt as claimed in claim 3
**characterized therein**,
that the bore (15) in the hub-formed part (11) acts as a seat for a hard body (12) intended to make drilling of the locking device more difficult.

5. A locking device for a wheel bolt as claimed in claim 4,
**characterized therein**,
that the hard body is constituted by a ball bearing ball (12).

6. A locking device for a wheel bolt as claimed in claim 1,
**characterized therein**,
that the cam (10) is constituted of a part which is separate from the hub part (11), and which is affixed to the hub part (11) by means of separate members (17).

7. A mounting key for mounting of the locking device as claimed in anyone of the preceding claims,
**characterized therein,**
that the key (19) is provided with a quadrangular plate, preferably from sheet steel, which at one side is provided with a rod-formed projecting part (19a), which in a direction towards the main part of the plate at one side continues in a first step-formed extension (19b) and at the other side in a second step-formed extension (19c), whereby the two step-formed extensions (19b, 19c) begin at different distances from the end of the rod-formed projecting part (19a), and where the extension (19b), which starts nearer to the end have a larger width than the second step-formed extension (19c) and furthermore a larger depth, thus that the two step-formed extensions (19b, 19c) continue into the quadrangular plate at the same distance from the said end thereof, whereby the rod-formed part (19a) is intended to be inserted to the bottom of the continuous channel and thereby together with the first extension (19b) permit screwing in of the screw (5) in the bore (3) in the bolt shaft, and where the second extension (19c) after pulling out of the mounting key (19) a short distance, can allow screwing in of the inner ring (6).

## Patentansprüche

1. Verriegelungsvorrichtung für einen Radbolzen (1) von der Art, welche mit einem Bolzenkopf (2) und einem Gewindeschaftabschnitt versehen ist,
**dadurch gekennzeichnet,**
**dass** der Bolzenkopf (2) an seiner vom Bolzenschaft wegweisenden Seite mit einem als ein Schlüsselgriff wirkenden Teil (2a) und einer koaxialen Gewindebohrung (3) in Form eines Sacklochs, welche sich am vom Schaftabschnitt wegweisenden Ende des Bolzens öffnet, ausgestattet ist,
**dass** in dem Bolzenkopf (2) in dem dem Ende des Bolzens nächsten Bereich, welcher vom Schaftabschnitt wegweist, wenigstens zwei Ausnehmungen (4) vorgesehen sind, welche von der Bohrung radial gerichtet sind,
**dass** eine Schraube (5) in die im Bolzenkopf vorgesehene koaxiale Bohrung (3) geschraubt werden kann,
**dass** die Schraube (5) mit einer sich radial erstreckenden Ausnehmung (5a) versehen ist,
**dass** die Schraube in ihrer Stellung, wenn sie in die Bohrung (3) im Bolzenkopf (2) geschraubt worden ist, eingerichtet ist,
um sich durch einen ersten inneren drehbaren Ring (6) und einen dazu koaxial angeordneten zweiten äußeren drehbaren Ring (7) zu erstrecken und diese zu halten,
**dass** sowohl der innere Ring (6) als auch der äußere Ring (7) mit einer Durchgangsöffnung (6a; 7a) versehen ist, welche im Wesentlichen die gleichen Abmessungen aufweisen, und dass sich von jeder dieser Durchgangsöffnungen eine radiale, durchgängige Nut (6b; 7b) erstreckt, wobei die durchgängigen Nuten (6b; 7b) im Wesentlichen die gleiche Abmessung wie die sich radial erstreckende Ausnehmung (5a) in der Schraube (5) aufweisen, dass der innere und äußere Ring (6, 7) um die Schraube (5) und bezüglich zueinander drehbar angeordnet sind, so dass die radial durchgängigen Nuten (6b; 7b) und die sich radial erstreckende Ausnehmung (5a) durch wechselseitige Drehung veranlasst werden können, zusammenzufallen und **dadurch** einen durchgängigen Kanal vom vom Bolzenkopf (2) wegweisenden Ende der Schraube bis zum Bereich um die Bohrung (3) im Bolzenkopf (2) auszubilden, und
**dass** eine an einem als Nabe ausgebildeten Mittelteil (11) angeordnete, sich axial erstreckende Nocke (10) angeordnet ist, um in den durchgängigen Kanal eingeführt zu werden, so dass ihr äußerer Nockenabschnitt (10a) in einer der Ausnehmungen (4) im Bolzenkopf (2) und ihr innerer Nockenabschnitt (10b) in einem Raum zwischen dem inneren Ring (6) und dem äußeren Ring (7) angeordnet ist, wobei der innere und äußere Ring (6, 7) nachfolgend auf eine wechselseitige Drehung bezüglich zueinander so einstellbar sind, dass Abschnitte des durch die durchgängigen Nuten (6b; 7b) und die sich radial erstreckende Ausnehmung (5a) ausgebildeten Kanals winkelig versetzt sind und **dadurch** den äußeren und/oder inneren Nockenteil (10a, 10b) so arretieren werden, dass er nicht herausgezogen wird.

2. Verriegelungsvorrichtung für einen Radbolzen nach Anspruch 1,
**dadurch gekennzeichnet,**
**dass** eine Abdeckung (13), welche den als Nabe ausgebildeten Mittelteil (11) umschließt, an den Mittelteil (11) angepasst und drehbar daran angebracht ist.

3. Verriegelungsvorrichtung für einen Radbolzen nach Anspruch 2,
**dadurch gekennzeichnet,**
**dass** der als Nabe ausgebildete Mittelteil (11) mit einer Bohrung (15) versehen ist, welche an der vom Radbolzen wegweisenden Seite ein Anbringungsmittel (14) zum Arretieren der Abdeckung (13) an dem Nabenteil hält.

4. Verriegelungsvorrichtung für einen Radbolzen nach Anspruch 3,
**dadurch gekennzeichnet,**
**dass** die Bohrung (15) im als Nabe ausgebildeten Teil (11) als eine Auflage für einen harten Körper (12) wirkt, welcher ein Aufbohren der Verriegelungsvorrichtung erschweren soll.

5. Verriegelungsvorrichtung für einen Radbolzen nach Anspruch 4,
**dadurch gekennzeichnet,**
**dass** der harte Körper durch eine Kugellagerkugel (12) gebildet ist.

6. Verriegelungsvorrichtung für einen Radbolzen nach Anspruch 1,
**dadurch gekennzeichnet,**
**dass** die Nocke (10) aus einem Teil gebildet ist, welcher separat vom Nabenteil (11) ist, und welcher an dem Nabenteil (11) mittels separater Elemente (17) befestigt ist.

7. Montageschlüssel zum Montieren der Verriegelungsvorrichtung nach einem der vorhergehenden Ansprüche,
**dadurch gekennzeichnet,**
**dass** der Schlüssel (19) mit einer rechteckigen Platte, bevorzugt aus Stahlblech, versehen ist, welche an einer Seite mit einem als Stab ausgebildeten hervorragenden Teil (19a) versehen ist, welcher sich in einer Richtung auf den Hauptteil der Platte zu an einer Seite in einen ersten als Stufe ausgebildeten Fortsatz (19b) und an der anderen Seite in einen zweiten als Stufe ausgebildeten Fortsatz (19c) fortsetzt, wobei die zwei als Stufen ausgebildeten Fortsätze (19b, 19c) bei verschiedenen Entfernungen vom Ende des als Stab ausgebildeten hervorragenden Teils (19a) anfangen, und wobei der Fortsatz (19b), welcher näher am Ende anfängt, eine größere Breite als der zweite als Stufe ausgebildete Fortsatz (19c) und weiterhin eine größere Tiefe aufweist, so dass sich die zwei als Stufen ausgebildeten Fortsätze (19b, 19c) in die rechteckige Platte bei der gleichen Entfernung vom Ende derselben fortsetzen, wobei der als Stab ausgebildete Teil (19a) zum unteren Ende des durchgängigen Kanals eingeführt werden soll und **dadurch** zusammen mit dem ersten Fortsatz (19b) ein Einschrauben der Schraube (5) in die Bohrung (3) im Bolzenschaft ermöglichen soll, und wobei der zweite Fortsatz (19c) ein Einschrauben des inneren Rings (6) ermöglichen kann, nachdem der Montageschlüssel (19) eine kurze Strecke herausgezogen worden ist.

## Revendications

1. Dispositif de verrouillage d'un boulon de roue (1), du type qui est muni d'une tête de boulon (2) et d'une partie d'arbre filetée,
**caractérisé en ce que**
la tête de boulon (2), sur son côté dirigé à l'opposé de l'arbre de boulon, est munie d'une partie (2a) agissant comme élément de préhension de clef, et d'un alésage fileté coaxial (3) ayant la forme d'un trou aveugle, qui s'ouvre à l'extrémité du boulon dirigée à l'opposé de la partie d'arbre,
dans la tête de boulon (2), dans la zone la plus proche de l'extrémité du boulon, dirigée à l'opposé de la partie d'arbre, sont agencés au moins deux évidements (4) dirigés radialement par rapport à l'alésage,
une vis (5) peut être vissée dans l'alésage axial (3) agencé dans la tête de boulon,
la vis (5) est munie d'un évidement s'étendant radialement (5a),
la vis, dans sa position lorsqu'elle a été vissée dans l'alésage (3) dans la tête de boulon (2), est adaptée pour s'étendre à travers un premier anneau rotatif intérieur (6) et un second anneau rotatif extérieur (7) agencé coaxialement par rapport à celui-ci, et pour les supporter,
chacun des anneaux intérieur (6) et extérieur (7) est muni d'une ouverture traversante (6a ; 7a) ayant sensiblement les mêmes dimensions, et **en ce qu'**à partir de chacune de ces ouvertures traversantes s'étend une gorge continue radiale (6b ; 7b), lesquelles gorges continues (6b ; 7b) ont sensiblement la même mesure que l'évidement s'étendant radialement (5a) dans la vis (5),
les anneaux intérieur et extérieur (6, 7) sont agencés de manière rotative autour de la vis (5) et en relation l'un par rapport à l'autre, de sorte que les gorges continues radialement (6b ; 7b) et l'évidement s'étendant radialement (5a), par rotation mutuelle, peuvent être amenés à coïncider et à former ainsi un canal continu à partir de l'extrémité de la vis dirigée à l'opposé de la tête de boulon (2) jusqu'à la zone autour de l'alésage (3) dans la tête de boulon (2), et
une came s'étendant axialement (10) agencée sur une partie centrale en forme de moyeu (11) est agencée pour être insérée dans le canal continu, pour qu'ainsi sa partie de came extérieure (10a) soit située dans un des évidements (4) dans la tête de boulon (2), et sa partie de came intérieure (10b) dans un espace entre l'anneau intérieur (6) et l'anneau extérieur (7), de sorte que les anneaux intérieur et extérieur (6, 7), en suivant une rotation mutuelle l'un par rapport à l'autre, sont ajustables pour qu'ainsi des parties du canal formé par les gorges continues (6b ; 7b) et l'évidement s'étendant radialement (5a) soient déplacées de manière angulaire, et empêchent de la sorte la partie de came extérieure et/ou intérieure (10a, 10b) d'être retirée.

2. Dispositif de verrouillage d'un boulon de roue selon la revendication 1, **caractérisé en ce qu'**un recouvrement (13) qui renferme la partie centrale en forme de moyeu (11) est agencé sur la partie centrale (11), et est fixé sur celle-ci de manière rotative.

3. Dispositif de verrouillage d'un boulon de roue selon la revendication 2, **caractérisé en ce que** la partie centrale en forme de moyeu (11) est munie d'un alésage (15) qui, sur le côté dirigé à l'opposé du boulon de roue, supporte des moyens de fixation (14) pour arrêter le recouvrement (13) sur la partie de moyeu.

4. Dispositif de verrouillage d'un boulon de roue selon la revendication 3, **caractérisé en ce que** l'alésage (15) dans la partie en forme de moyeu (11) agit comme un siège pour un corps dur (12) prévu pour rendre le perçage du dispositif de verrouillage plus difficile.

5. Dispositif de verrouillage d'un boulon de roue selon la revendication 4, **caractérisé en ce que** le corps dur est constitué par une bille de roulement à billes (12).

6. Dispositif de verrouillage d'un boulon de roue selon la revendication 1, **caractérisé en ce que** la came (10) est constituée d'une partie qui est séparée de la partie de moyeu (11), et qui est fixée sur la partie de moyeu (11) par l'intermédiaire d'éléments séparés (17).

7. Clef de montage pour montage du dispositif de verrouillage selon l'une quelconque des revendications précédentes, **caractérisée en ce que** la clef (19) est munie d'une plaque quadrangulaire, de préférence en acier en feuille, qui au niveau d'un côté est muni d'une partie faisant saillie en forme de tige (19a), qui dans une direction vers la partie principale de la plaque au niveau d'un premier côté continue dans un premier prolongement en forme de en gradin (19b), et au niveau de l'autre côté dans un second prolongement en forme de gradin (19c), de sorte que les deux prolongements formés en gradin (19b, 19c) commencent à des distances différentes à partir de l'extrémité de la partie faisant saillie en forme de tige (19a), et où le prolongement (19b), qui commence plus proche de l'extrémité, a une largeur plus grande que le second prolongement en forme de gradin (19c) et de plus une plus grande profondeur, pour qu'ainsi les deux prolongements en forme de gradin (19b, 19c) continuent dans la plaque quadrangulaire à la même distance de leur extrémité, de sorte que la partie en forme de tige (19a) est prévue pour être insérée dans la partie inférieure du canal continu, et ainsi ensemble avec le premier prolongement (19b) permet un vissage de la vis (5) dans l'alésage (3) dans l'arbre de boulon, et où le second prolongement (19c), après retrait de la clef de montage (19) sur une courte distance, peut permettre le vissage de l'anneau intérieur (6).
